# EUROPÄISCHE PATENTANMELDUNG

(11) **EP 3 402 309 A1**
(43) Veröffentlichungstag der Anmeldung: **14.11.2018**
(21) Anmeldenummer: 18167716.2
(22) Anmeldetag: 17.04.2018
(51) Int. Cl.: H05B 1/02, H02M 7/219, H05B 3/82

(54) **VARIABLE LEISTUNGSSTEUERUNG BEI ELEKTRISCHEN ZUSATZHEIZERN**

(30) Priorität: 09.05.2017 DE 102017109934
(71) Anmelder: Vaillant GmbH, 42859 Remscheid (DE)
(72) Erfinder: Mayer, André, 58099 Hagen (DE); Lodorf, Dominik, 50829 Köln (DE); Habenicht, Martin, 42857 Remscheid (DE); Roth, Stefan, 42897 Remscheid (DE); Frackenpohl, Oliver, 50769 Köln (DE)
(74) Vertreter: Hocker, Thomas

(57) **Zusammenfassung**

Bei einer Leistungssteuerung mit Strombegrenzung für ein elektrisches Heizelement (3) mit mindestens einem Widerstandsheizdraht (4), das über ein Halbleitermodul (2) mit einer Wechselstromversorgung (1) verbunden ist, wobei das Halbleitermodul (2) über eine modifizierte Inverter-Ansteuerung verfügt, um die eingehende Wechselstromversorgung (1) in eine gepulste Gleichstromversorgung umzuwandeln, verfügt das Halbleitermodul (2) über eine IGBT-Brücke (8) mit Bipolartransistoren (9) mit isolierter Gate-Elektrode.

## Beschreibung

Die Erfindung bezieht sich auf die Leistungssteuerung mit Strombegrenzung für ein elektrisches Heizelement. Solche Heizelemente werden häufig bei Wärmepumpen als elektrischer Zusatzheizer eingesetzt, um bei niedrigen Temperaturen einer Umweltwärmequelle einen Betrieb der Wärmepumpe zu ermöglichen.

Dieser Zusatzheizer enthält üblicherweise einen oder mehrere elektrische Widerstandsheizdrähte, die üblicherweise in sandgefüllte Metallrohrwendeln eingelegt sind und die Wärme indirekt an das zu beheizende Fluid abgeben. Es gibt auch Zusatzheizer, die nach dem sogenannten Blankdrahtprinzip arbeiten, bei dem das zu beheizende Fluid direkt an den Widerstandsheizdrähten vorbeiströmt und so die Wärme übertragen wird.

Häufig ist eine hohe Heizleistung der elektrischen Zusatzheizung gewünscht. Hieraus ergibt sich eine vergleichsweise hohe Strombelastung der Hausinstallation. In vielen Haushalten sind jedoch noch Versorgungsleitungen mit eingeschränkter Strombelastbarkeit installiert. Um nicht in die Hausinstallation eingreifen zu müssen, ist es daher in diesen Fällen erforderlich, den elektrischen Zusatzheizer in seiner Stromaufnahme zu begrenzen.

Dies ist beispielsweise über eine spezielle Bauart des Zusatzheizers mit mehreren Heizwendeln möglich, bei der die Stromversorgung wahlweise auf einzelne oder alle Heizwendeln geschaltet werden kann. Diese Beschaltung kann dabei manuell erfolgen, indem etwa wahlweise nicht alle Heizwendeln an die Stromversorgung angeschlossen werden, oder aber mit Hilfe eines Klemmenblocks mit sogenannten Jumpern bestimmte Kombinationen von Heizwendeln aktivierbar sind.

Mit Hilfe der Halbleitertechnik kann für eine Leistungsreduzierung sowie einer Reduzierung der Stromaufnahme alternativ auch die Stromversorgung beeinflusst werden, ohne dass hierzu eine spezielle Bauart des elektrischen Zusatzheizers erforderlich ist. Für einen Zusatzheizer mit Widerstandsheizdrähten sind vergleichsweise einfache Ansteuerungen möglich, da Widerstandsheizdrähte Ohmsche Widerstände darstellen und daher zwischen Strom und Spannung kein Phasenversatz auftritt (cos ϕ = 1).

Dies geschieht beispielsweise mit einer Phasenanschnittsteuerung, bei welcher der Sinus des zugeführten Drehstroms teilweise weggeschnitten wird, oder mit einer Puls-Paket-Steuerung, bei welcher eine Anzahl von ganzen Sinus-Wellen des Drehstroms weggeschaltet wird. Aufgrund der dann nicht mehr rein sinusförmigen Stromweiterleitung ergeben sich allerdings störende Beeinträchtigungen des Stromnetzes durch Oberschwingungen sowie Einschränkungen hinsichtlich der Netzstabilität. Die entstehenden elektromagnetischen Störwellen können zu Funktionsstörungen bei der Wärmepumpe und anderen Haushaltsgeräten führen. Zudem ist mit der Phasenanschnittsteuerung zwar eine Leistungssteuerung möglich, die Stromaufnahme des Zusatzheizers kann aber nur sehr eingeschränkt reduziert werden. Für die Puls-Paket-Steuerung lässt sich die Stromaufnahme des Zusatzheizers gar nicht reduzieren.

Ziel der Erfindung ist es, eine Leistungssteuerung mit Strombegrenzung für Elektro-Zusatzheizer verschiedener Bauarten mit einem oder mehreren Widerstandsheizdrähten für Hausinstallationen mit einer begrenzten Strombelastbarkeit so durchzuführen, dass ein beliebiger reduzierter Stromwert I_{red} anteilig vom maximalen Stromwert Iₘₐₓ einstellbar ist, und gleichzeitig eine Leistungssteuerung ermöglicht wird, sodass zum einen die Hausinstallation nicht überlastet wird, zum anderen aber noch eine ausreichende elektrische Leistung des Zusatzheizers zur Verfügung steht.

Im Folgenden wird die Erfindung anhand der Zeichnungen detaillierter erläutert. Hierbei zeigen
Figur 1 eine Phasenanschnittssteuerung gemäß dem Stand der Technik,
Figur 2 eine Puls-Paket-Steuerung gemäß dem Stand der Technik sowie
Figur 3 eine erfindungsgemäße Schaltung.

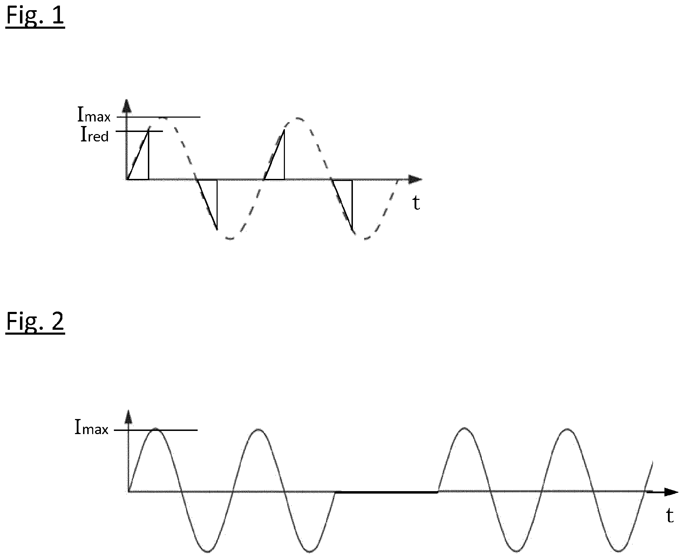

Wie in Fig. 1 zu sehen, wird bei der Phasenanschnittsteuerung der Sinus der Stromversorgung zeitanteilig weggeschnitten, sodass nur noch der Strom bezüglich der grau markierten Bereiche verbleibt. Die elektrische Leistung für einen Widerstandsheizdraht kann hierbei aus dem Zeitanteil der grauen Bereiche im Verhältnis zum Zeitraum der vollen Sinuswellen ermittelt werden. Allerdings ergibt sich für die "abgeschnittene" Sinuswelle erst für einen Wert unter 50% der Nennleistung (Schnitt vor Erreichen des Maximums der Sinuswelle) ein reduzierter Stromwert I_{red}. Tatsächlich ist der Zusatzheizer für einen spürbar reduzierten Strom I_{red} nur von 0 bis etwa 40% seiner Nennleistung nutzbar, was die praktische Anwendung stark einschränkt.

Die in Fig. 2 gezeigte Puls-Paket-Steuerung schneidet nicht Bereiche einer Sinuswelle, sondern ganze Sinuswellen ab. Die Leistungsreduzierung ergibt sich aus dem Verhältnis der Anzahl der verbleibenden zu den herausgefilterten Sinuswellen. Hierbei lässt sich der Stromwert nicht reduzieren, da der Stromwert des Pulses der maximale Strom Iₘₐₓ ist, dieser wirkt letztendlich auf die Hausinstallation.

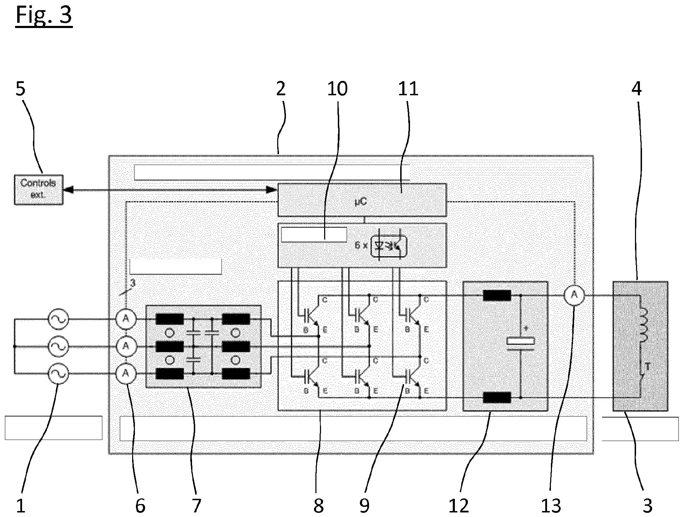

In Fig. 3 ist die erfindungsgemäße Ansteuerung dargestellt. Eine Stromversorgung 1, hier als 3-phasiger Drehstrom angegeben, wird mittels eines Halbleitermoduls 2, das als Inverter agiert, mit einem Heizelement 3, das einen Widerstandsheizdraht 4 enthält, verbunden. Der Inverter wandelt dabei die Frequenz und die Spannung der Stromversorgung 1 um; das Ausgangssignal des Inverters wird dann nachgeschaltet gleichgerichtet. Das Halbleitermodul 2 verfügt auf der Seite der Stromversorgung 1 über eingangsseitige Stromwandler 6, die dazu dienen das Netz vor Rückwirkungen zu schützen. Dem folgt ein eingangsseitiger Drehstrom-Glättungsfilter 7 für elektromagnetische Verträglichkeit (EMV). Ferner ist zwischen dem Halbleitermodul 2 und dem Heizelement 3 ein ausgansseitiger Gleichstromwandler 13 angeordnet. Am Ausgang des Halbleitermoduls 2 zum Heizelement 3 ist ein ausgangsseitiger Gleichstrom-Glättungsfilter 12 für elektromagnetische Verträglichkeit (EMV) angeordnet. Der ausgangsseitige Gleichstrom-Glättungsfilter 12 verfügt über je eine Spule in jeder Ausgangsleitung sowie einen Kondensator zwischen diesen Ausgangsleitungen. Das Halbleitermodul 2 wandelt den eintretenden Drehstrom mittels einer IGBT-Brücke 8 mit sechs Bipolartransistoren 9 mit isolierter Gate-Elektrode (IGBT = insulated-gate bipolar transistor) um; hierbei sind in der IGBT-Brücke 8 je zwei Bipolartransistoren 9 pro Phase des Drehstroms angeordnet. Hierdurch ergibt die Summe der aus den drei Phasen des Drehstroms entstandenen Anteilen einen gleichmäßig gepulsten Gleichstrom, wobei durch einen eingangsseitigen Glättungsfilter 7 und einen ausgangsseitigen Glättungsfilter 12 störende Oberschwingungen, die aus der Umwandlung des sinusförmigen Drehstroms in einen gepulsten Gleichstrom entstehen, weitgehend eliminiert werden. Bei der IGBT-Brücke 8 handelt es sich um eine sogenannte B 6-Brücke. Während am Ausgang der IGBT-Brücke 8 ein gepulster Gleichstrom (Sägezahnfunktion) anliegt, glättet der ausgangsseitige Glättungsfilter 12 das Ausgangssignal zu einer konstanten Gleichspannung. Jeder Bipolartransistor 9 wird dabei von einem Treiber 10 angesteuert, der wiederum durch einen Mikroprozessor 11 gesteuert wird. Die durch die eingangsseitigen Stromwandler 6 und den ausgangsseitigen Stromwandler 13 gemessenen Stromwerte werden in einem Mikroprozessor 11 verglichen. Der Mikroprozessor 11 stellt dann über die Treiber 10 die Bipolartransistoren 9 derart ein, dass der ausgangsseitig gemessene Stromwert einem von der Reglersteuerung 5 eines nicht näher dargestellten Heizgerätes vorgegebenen reduzierten Stromwert I_{red} entspricht. Bei dem Heizgerät kann es sich dabei um eine Wärmpumpe, bei dem Heizelement um einen Zusatzheizer im Umweltwärmequellenkreislauf handeln. Die Erfindung ist jedoch nicht auf diesen Anwendungsfall begrenzt. Der Heizer kann beispielsweise auch der Heizer einer Elektroheizer oder bei einer konventionellen, brenngasbetriebenen Heizung ein Zusatzheizer in einem Heizungskreislauf oder einem Warmwasserspeicher sein.

Besonders vorteilhaft ist eine solche Ansteuerung für einen einfachen und damit preiswerten Zusatzheizer mit nur einem Widerstandsheizdraht, da hiermit im Gegensatz zu vielen anderen Lösungen eine praktisch stufenlos feine Einstellung einer Teillast möglich ist.

Zudem kann die erfindungsgemäße Ansteuerung dafür genutzt werden, selbst erzeugten Strom beispielsweise aus einer Photovoltaikanlage für den Zusatzheizer nutzen zu können. Da Strom generell nur mit vergleichsweise hohem Aufwand gespeichert werden kann, ist es vorteilhaft, anfallenden selbsterzeugten Strom direkt nutzen zu können. Hierzu bietet sich der Zusatzheizer der Wärmepumpe an, der praktisch jederzeit zur Verfügung steht und den selbsterzeugten Strom als Wärmeenergie an das Heizwasser abgeben kann, und damit vorzugsweise zur Erwärmung eines Trinkwasserspeichers oder alternativ auch zur Beheizung des Wohnhauses genutzt werden kann. Hierbei kann mehr Leistung dem Heizelement 3 zugeführt werden als es die Hausinstallation üblicherweise erlaubte und diese somit entlastet werden, da der selbsterzeugte Strom der Photovoltaikanlage dann nur noch aus der Hausinstallation ergänzt wird.

Die übrigen Stromverbraucher im Haushalt wie Herd, Waschmaschine, Kleingeräte, Fernseher, Beleuchtung werden vergleichsweise kurzzeitig aktiviert und eignen sich daher praktisch nicht als Verbraucher für selbsterzeugten Strom. Kühlschrank und Tiefkühltruhe wiederum nehmen nur eine geringe elektrische Leistung auf und sind dazu noch auf eine gleichmäßige Stromversorgung angewiesen, um ein mögliches Takten der Geräte zu vermeiden. Daher sind auch diese Geräte grundsätzlich weniger geeignet zum Verbrauch von selbsterzeugten Strom.

Der elektrische Zusatzheizer 3 kann hingegen zu gewissen Zeiten auch schon durch eine Reglersteuerung 5 der Wärmepumpe aktiviert worden sein und wird dann für die Aufnahme von selbsterzeugten Strom präferiert. Die erfindungsgemäße Ansteuerung kann auch für diesen Fall genutzt werden. Das Halbleitermodul 2 reduziert hierbei den aus der Stromversorgung 1 bereitgestellten Strom zum Zusatzheizer 3 so weit, dass der verbleibende selbsterzeugte Strom noch zusätzlich einspeist werden kann.

Statt einer dreiphasigen Drehstromversorgung 1 kann erfindungsgemäß auch eine sinusförmige einphasige Wechselstromversorgung in einen Gleichstrom umgerichtet werden.

### Bezuaszeichenliste

1 Stromversorgung mit Drehstrom
2 Halbleitermodul
3 Heizelement
4 Widerstandsheizdraht
5 Reglersteuerung
6 Eingangsseitiger Stromwandler
7 Eingangsseitiger Glättungs-EMV-Filter Drehstrom
8 IGBT-Brücke
9 Bipolartransistoren
10 Treiber
11 Mikroprozessor
12 Ausgangsseitiger Glättungs-EMV-Filter Gleichstrom
13 Ausgangsseitiger Gleichstromwandler

## Patentansprüche

1. Leistungssteuerung mit Strombegrenzung für ein elektrisches Heizelement (3) mit mindestens einem Widerstandsheizdraht (4), das über ein Halbleitermodul (2) mit einer Wechselstromversorgung (1) verbunden ist, wobei das Halbleitermodul (2) über eine modifizierte Inverter-Ansteuerung verfügt, um die eingehende Wechselstromversorgung (1) in eine gepulste Gleichstromversorgung umzuwandeln, **dadurch gekennzeichnet, dass** das Halbleitermodul (2) über eine IGBT-Brücke (8) mit Bipolartransistoren (9) mit isolierter Gate-Elektrode verfügt.

2. Leistungssteuerung nach Anspruch 1, **dadurch gekennzeichnet, dass** die Bipolartransistoren (9) über jeweils einen Treiber (10) mit einem Mikroprozessor (11) verbunden sind.

3. Leistungssteuerung nach Anspruch 1 oder 2, **dadurch gekennzeichnet, dass** zwischen der Wechselstromversorgung (1) und der IGBT-Brücke (8) ein eingangsseitiger Drehstrom-Glättungsfilter (7) für elektromagnetische Verträglichkeit angeordnet ist.

4. Leistungssteuerung nach einem der Ansprüche 1 bis 3, **dadurch gekennzeichnet, dass** zwischen der IGBT-Brücke (8) und dem Heizelement (3) ein ausgangsseitige Glättungsfilter (12) angeordnet ist.

5. Leistungssteuerung nach einem der Ansprüche 1 bis 4, **dadurch gekennzeichnet, dass** eingangsseitige Stromwandler (6) zwischen der Stromversorgung (1) und der IGBT-Brücke (8) und / oder ausgangsseitige Stromwandler (13) zwischen der IGBT-Brücke (8) und dem Heizelement (3) zur Messung der dort fließenden Stromwerte vorhanden sind.

6. Leistungssteuerung nach Anspruch 5, **dadurch gekennzeichnet, dass** die eingangsseitige Stromwandler (6) und / oder ausgangsseitige Stromwandler (13) mit einem Mikroprozessor (11) verbunden sind.

7. Verfahren zum Betrieben einer Leistungssteuerung mit Strombegrenzung für ein elektrisches Heizelement (3) mit mindestens einem Widerstandsheizdraht (4), das über ein Halbleitermodul (2) mit einer Wechselstromversorgung (1) verbunden ist, wobei das Halbleitermodul (2) über eine modifizierte Inverter-Ansteuerung verfügt, um die eingehende Wechselstromversorgung (1) in eine gepulste Gleichstromversorgung umzuwandeln, wobei das Halbleitermodul (2) über eine IGBT-Brücke (8) mit Bipolartransistoren (9) mit isolierter Gate-Elektrode verfügt und die Bipolartransistoren (9) über jeweils einen Treiber (10) mit einem Mikroprozessor (11) verbunden sind, sowie eingangsseitigen Stromwandlern (6) und mindestens einem ausgangsseitigen Stromwandler (13), welche mit dem Mikroprozessor (11) verbunden sind, **dadurch gekennzeichnet, dass** die durch die eingangsseitigen Stromwandler (6) und den ausgangsseitigen Stromwandler (13) gemessenen Stromwerte in dem Mikroprozessor (11) verglichen werden und der Mikroprozessor (11) dann über die Treiber (10) die Bipolartransistoren (9) derart einstellt, dass der ausgangsseitig gemessene Stromwert einem vorgegebenen Stromwert I_{red} entspricht.
